# EUROPÄISCHE PATENTSCHRIFT

(11) **EP 1 211 946 B1**
(45) Veröffentlichungstag und Bekanntmachung des Hinweises auf die Patenterteilung: **26.04.2006**
(21) Anmeldenummer: 00960639.3
(22) Anmeldetag: 09.09.2000
(51) Int. Cl.: A23B 4/10, A23B 4/20, A23L 1/31, A23L 1/314, A23L 1/315, A23L 1/325

(54) **VERFAHREN ZUR LAGERUNG VON FRISCHFLEISCH**
METHOD FOR STORAGE OF FRESH MEAT
METHODE DE STOCKAGE DE VIANDE FRAICHE

(30) Priorität: 15.09.1999 DE 19944171; 22.07.2000 DE 10035790
(43) Veröffentlichungstag der Anmeldung: 12.06.2002
(73) Patentinhaber: GELITA AG, 69412 Eberbach (DE)
(72) Erfinder: MARGGRANDER, Kurt, 74722 Buchen-Bödigheim (DE)
(74) Vertreter: Hoeger, Stellrecht & Partner Patentanwälte
(86) Internationale Anmeldenummer: PCT/EP2000/008829
(87) Internationale Veröffentlichungsnummer: WO 2001/019198

(56) Entgegenhaltungen:
- EP-A- 0 277 448
- EP-A- 0 547 783
- EP-A- 0 646 327
- GB-A- 2 036 535
- GB-A- 2 257 891
- US-A- 4 504 502
- US-A- 5 540 944
- US-A- 5 702 741
- US-A- 6 054 154

## Beschreibung

Die vorliegende Erfindung betrifft ein Verfahren zur Lagerung von Frischfleisch und die Verwendung von Hydrokolloiden bei der Behandlung der Oberfläche von Frischfleisch.

Es ist in der Menschheitsgeschichte schon seit langem bekannt, mittels einer Salzsole oder Einlegen in Salz, das sogenannte "Pökeln", frisch geschlachtetes Fleisch längere Zeit haltbar zu machen und eine längerfristig gleichbleibende Fleischqualität für den menschlichen Verzehr zu gewährleisten. Weitere altbekannte Verfahren sind beispielsweise das Räuchern und Trocknen.

Diese konservierenden Behandlungen verändern jedoch das behandelte Fleisch in einem Maße, daß dieses nicht mehr als Frischfleisch bezeichnet werden kann.

Heutzutage bevorzugen Verbraucher Frischfleisch, da mittlerweile auch Lagerungstechniken, beispielsweise Kühllagerung oder Einfrieren mit nachfolgendem Auftauen, für jedermann zugänglich sind.

Die Qualität von Frischfleisch für den menschlichen Verzehr wird bei seiner Lagerung nach der Schlachtung und Zerlegung des Tieres durch die Lagerungsparameter wie Temperatur und Feuchtigkeit, insbesondere bei den vorerwähnten Lagerungstechniken, signifikant beeinflußt.

Zur Aufrechterhaltung der Qualität von großteiligem Frischfleisch bei längerer Lagerung ist aus Marggrander und Hofmann, Fleischwirtschaft 77, Seiten 19 bis 20, 1997, bekannt, Fleischwaren mit einer Gelatinelösung zur Erzeugung eines Gelatinefilms zu besprühen.

Dieser Film erschwert den Zutritt von Sauerstoff zur Fleischoberfläche, so daß Oxidationsvorgänge, die die Ursache von Ranzigwerden sind, verringert werden. Gleichzeitig verhindert dieser Film beim längeren Kühl- und Gefrierlagern den sogenannten Gefrierbrand und vermindert den Gewichtsverlust durch Austrocknen des Fleisches.

Ähnliches ist aus Villegas et al., Fleischwirtschaft 4/99, Seiten 86 bis 89, bekannt, wo eine Gelatinebeschichtung ebenfalls als eine gute Oxidationsbarriere beschrieben ist, so daß die derart behandelten Fleischwaren eine verminderte Oxidation und nur eine geringe Farbverschlechterung bei längerer Lagerung aufweisen.

Verbraucher bevorzugen, insbesondere bei portioniert abgepacktem Fleisch, ein appetitliches, zumeist rosiges oder bei Geflügel und Fisch weißes Aussehen des Fleischstückes, das auch keine Blutreste aufweisen und dessen Konsistenz noch fest sein sollte.

Eine für den Verbraucher subjektive Qualitätsverschlechterung entsteht jedoch häufig dadurch, daß Fleisch während der Lagerung, insbesondere bei Einfrier- und Auftauvorgängen oder bei Kühllagerung, Flüssigkeit (den sogenannten Tropfsaft) sowie mit Blut vermischtes Wasser verliert, und die Fleischoberfläche durch die ausgetretene Flüssigkeit einen optisch schlechten Eindruck macht. Dies führt letztendlich dazu, daß der Verbraucher derartiges, insbesondere schon portioniertes Fleisch ungern erwirbt und dieses daher oft zu weniger hochwertigen Produkten, beispielsweise Tiernahrung, weiterverarbeitet werden muß.

Mit dem Aufbringen eines Gelatinefilms, wie oben beschrieben, kann man das Problem des Tropfsaftes nicht in den Griff bekommen, ohne daß das äußere Erscheinungsbild verändert wird und somit der Frischfleischcharakter verloren geht.

Eine bekannte Maßnahme zur optischen Verbesserung der Präsentation von portioniertem Frischfleisch in Supermärkten besteht in der Verwendung von Zellstoffeinlagen in den Packungen, die den entstehenden Tropfsaft aufnehmen können. Dies führt jedoch dazu, daß diese Zellstoffeinlagen oft aufgrund der bluthaltigen ausgetretenen Flüssigkeit auf den Verbraucher einen wenig appetitlichen Eindruck machen.

Die europäischen Patentschriften EP 0 547 783 und EP 0 646 327 beschreiben die Behandlung der Oberfläche von Fleisch mit einer Mischung aus Salz und Carrageenan, um den Gewichtsverlust des Fleisches beim anschließenden Garen zu verringern. Durch das notwendige Erhitzen handelt es sich dann natürlich nicht mehr um Frischfleisch, sondern um ein Fleischprodukt. Ein etwaiger Effekt dieses Verfahrens auf das frische (rohe) Fleisch wird nicht beschrieben.

Aus den US-Patenten 5,702,741 und 5,540,944 in ein Verfahren bekannt bei dem Lebensmittel, insbesondere auch Fleisch mit festern Hydrokolloid im Rahmen der Herstellung von sogenantun Convenience-Food behandelt wird.

Aufgabe der vorliegenden Erfindung ist es daher, ein Verfahren zur Lagerung von Frischfleisch vorzuschlagen, bei dem das Entstehen von Tropfsaft während der Lagerung möglichst weitgehend vermieden werden kann und nicht nur, wie bei der Verwendung von Zellstoffeinlagen, aufgesaugt werden kann.

Diese Aufgabe wird bei dem eingangs beschriebenen Verfahren durch die Merkmale des Anspruchs 1 gelöst.

Unter Behandlung von Fleisch mit festem Hydrokolloid wird verstanden, daß das feste Hydrokolloid mittels an sich bekannter Methoden, wie z.B. Bestäuben, auf die Oberfläche des Fleisches, möglichst gleichmäßig verteilt, aufgebracht wird.

Zur Erzielung des erfindungsgemäßen Effekts reichen regelmäßig bereits kleinere Mengen Hydrokolloid aus. Durch die erfindungsgemäße Behandlung des Frischfleisches mit festem Hydrokolloid ändert das optische Erscheinungsbild sowie die Haptik der Ware im wesentlichen nicht, so daß der Verbraucher zwischen erfindungsgemäß behandeltem und unbehandeltem Frischfleisch praktisch keinen Unterschied feststellen kann.

Erstaunlicherweise erlaubt die Behandlung von Fleisch mit festem Hydrokolloid, wobei das Fleisch insbesondere in portionierten Stücken oder gar als Hackfleisch vorliegen kann, daß bei Kühllagerung, bzw. Einfrieren und Auftauen des Fleisches, das Entstehen von Tropfsaft stark zurückgedrängt oder sogar weitgehend vermieden werden kann, ohne daß hierdurch das Erscheinungsbild des Frischfleisches geändert wird.

Mit der Zurückdrängung des Tropfsaftverlustes geht eine Verlustminimierung des Einwaagegewichtes einher, die es ermöglicht, eine Verringerung der herkömmlicherweise notwendigen Mehreinwaage des Fleisches vorzunehmen, wobei das auf der Verpackungskennzeichnung aufgedruckte Einwaagegewicht auch bei längerer Lagerung eingehalten wird.

Eine Verringerung der Mehreinwaage von Frischfleisch ist bis zu 3 bis 5 Gew.%, bezogen auf die Nettoeinwaage des Fleisches, möglich, so daß sich für einen Fleischverarbeitungs- und/oder Fleischverpackungsbetrieb durch die Einwaageersparnis ein wirtschaftlich nicht unbedeutender Mehrerlös ergibt.

Die Behandlung mit festem Hydrokolloid ermöglicht ebenso, auf die Einlage eines Zellstoffgewebes zu verzichten, wodurch ebenso Kosten eingespart werden können und das unappetitliche Aussehen des mit blutigem Fleischsaft verunreinigten Zellstoffgewebes vermieden werden kann, so daß sich beispielsweise abgepacktes Fleisch dem Konsumenten appetitlicher präsentiert.

Darüber hinaus behält das Fleisch durch die Behandlung mit festem Hydrokolloid seine natürliche frische Fleischfarbe und bewahrt so ebenfalls sein appetitliches Aussehen.

Besondere Vorteile hat das erfindungsgemäße Verfahren bei portioniertem Fleisch. Es ist natürlich denkbar, daß auch großteiliges Fleisch, Fisch oder Geflügel derart behandelt und somit länger haltbar gemacht wird. Jedoch wird in Anbetracht der Hauptabnehmerkreise, nämlich der Konsumenten in Supermärkten oder Fleischereien, die Fleisch für den täglichen Bedarf erwerben, der Schwerpunkt des Einsatzes des erfindungsgemäßen Verfahrens in der Behandlung von portionierter Ware liegen. Dies schließt ebenso vorgefertigtes Hackfleisch ein.

Vorteilhafterweise erfolgt die Behandlung mit fein verteiltem Hydrokolloid. Unter fein verteilt werden Granulat oder Pulver mit einer mittleren Korngröße verstanden, die deutlich unter 1 mm liegt. Das fein verteilte Hydrokolloid ermöglicht den Einsatz von geringeren Mengen an Hydrokolloid und die Abdeckung einer größeren Oberfläche des Fleisches. Außerdem wird so die wirksame Oberfläche der Hydrokolloide erhöht. Darüber hinaus wird der Geschmack des Fleisches durch eine feine Verteilung des Hydrokolloids weniger vom Hydrokolloid beeinflußt.

Besonders große Effekte werden mit sprühgetrocknetem Hydrokolloidmaterial erzielt.

Eine kleine Korngröße des Hydrokolloids ermöglicht auch das einfache Behandeln von kleinstückigem bzw. gehacktem Fleisch.

Von besonderem Vorteil ist es, wenn das Hydrokolloid in Pulverform vorliegt. Da Hydrokolloide bei allen bislang bekannten Verfahren zu ihrer Gewinnung in Pulverform anfallen, können diese somit ohne einen weiteren kosten- und verfahrensintensiven Weiterverarbeitungsschritt eingesetzt werden.

Die mittlere Teilchengröße des Hydrokolloidpulvers beträgt dabei vorzugsweise < 0,2 mm, weiter bevorzugt 0,05 mm bis 0,15 mm.

Bevorzugt ist das Hydrokolloid ein Hydrokolloid auf Collagenbasis, insbesondere Gelatine, tierische Leime, Collagen, Caseine, Molkenproteine und/oder deren Hydrolysate sowie deren Mischungen untereinander. Damit ist gewährleistet, daß die Hydrokolloide Standardhydrokolloide sind, die einfach herzustellen und kostengünstig erhältlich sind und somit keine größeren zusätzlichen Kosten für den fleischverarbeitenden Betrieb verursachen.

Erfindungsgemäß wird das Fleisch mit 0,2 bis 1,5 Gew.% Hydrokolloid behandelt. Bereits mit 0,2 Gew.% Hydrokolloid wird eine zufriedenstellende Bindung des Fleischsaftes erzielt. Mehr als 1,5 Gew.% sind zwar ebenso möglich, jedoch ist dies aus wirtschaftlichen Gesichtspunkten aufgrund des Mehrverbrauches an Hydrokolloid weniger sinnvoll, und der Geschmack des Fleisches kann durch übermäßige Zugabe an Hydrokolloid leicht verfälscht werden.

In einer weiteren bevorzugten Ausführungsform wird das Fleisch mit 0,5 bis 0,9 Gew.% Hydrokolloid, bezogen auf das Fleischgewicht, behandelt. Innerhalb dieser Bereichsgrenzen wird eine optimale Balance zwischen der Bindung des Fleischsaftes und einer wirtschaftlich vertretbaren Menge von Hydrokolloid erreicht.

Das erfindungsgemäße Verfahren läßt sich anwenden auf: Säugetierfleisch, beispielsweise Rind-, Schweine-, Lamm- oder Wildfleisch. Dieses Verfahren erlaubt die Behandlung sämtlicher eßbarer Fleischsorten von Säugetieren gegen Tropfsaftverlust, die so in appetitlicher Weise dem menschlichen Verzehr zugeführt werden können.

Bevorzugt ist in diesem Falle, daß das Hydrokolloid aus tierischem Collagen von Säugetieren hergestellt ist. Damit wird gewährleistet, daß es zu keiner von Hydrokolloiden aus fleischfremden Rohstoffen herrührenden möglichen Verfremdung des Fleischgeschmackes kommt.

In einer weiteren vorteilhaften Ausführungsform ist das Fleisch Geflügelfleisch. Mit dem erfindungsgemäßen Verfahren können sämtliche dem menschlichen Verzehr zugänglichen Geflügelsorten gegen Tropfsaftverlust behandelt werden.

Gerade die Haut von Geflügel bekommt bei längerer Lagerung durch Tropfsaftaustritt oft ein unappetitliches Aussehen. Das Fleisch stellt sich den Konsumenten oft glasig-wäßrig dar. Diese Nachteile werden durch das erfindungsgemäße Verfahren nahezu vollständig vermieden.

In jedem Falle wird man das Hydrokolloid bevorzugt mit möglichst geringem Eigengeschmack auswählen. Selbstverständlich können in diesem Falle auch andere Collagene, die einen stärkeren Eigengeschmack haben, verwendet werden, jedoch kann dies unter Umständen zu einer Verfremdung des Geflügelgeschmackes führen, so daß in diesem Fall hochreines Collagen im Hinblick auf die sensorischen Eigenschaften des Produktes bevorzugt ist.

In einer weiteren vorteilhaften Ausführungsform ist das Fleisch in dem erfindungsgemäßen Verfahren Fischfleisch. Fisch wird bei längerer Lagerung oft eingefroren und verliert anschließend beim Auftauvorgang sehr viel Wasser und bedarf daher vor dem Verzehr einer aufwendigeren Behandlung als die vorgenannten Fleischsorten. Mit dem erfindungsgemäßen Verfahren können sämtliche dem menschlichen Verzehr zugänglichen Fische behandelt und insbesondere das gerade bei Fischen auftretende Problem des extrem hohen Tropfsaftaustritts mit einer nachfolgenden aufwendigen Behandlung nahezu vollständig vermieden werden.

Bevorzugt ist in diesem Falle das Hydrokolloid mit möglichst geringem Eigengeschmack ausgewählt. Da Fisch einen ausgeprägten Eigengeschmack hat, ist es in diesem Falle im Hinblick auf die sensorischen Eigenschaften bevorzugt, hochreines Collagen im erfindungsgemäßen Verfahren einzusetzen. Natürlich können ebenso andere, weniger geschmacksneutrale Hydrokolloide ausgewählt werden, jedoch ist in diesem Fall eine Verfremdung des Fischgeschmackes möglich.

Jedoch ist auch der Einsatz von Hydrokolloiden, die aus Pflanzenrohstoffen gewonnen werden, bei allen vorgenannten Fleischsorten möglich, da diese oftmals geschmacksneutraler sind als beispielsweise aus Geflügel, Tieren oder Fischen gewonnenes Collagen. Denkbar ist auch der Einsatz einer Mischung von Hydrokolloiden, die auf tierischen und pflanzlichen Rohstoffen basieren. Das Mischungsverhältnis ist dabei frei wählbar. Es wird nur von den bedarfsweise einzustellenden sensorischen Eigenschaften, wie z. B. weitgehender Beibehaltung des typischen Fleischerzeugnisgeschmacks, beeinflußt und wird je nach Fleischsorte und Hydrokolloid individuell schwanken.

Die Verwendung von aus tierischen oder pflanzlichen Ausgangsprodukten hergestellten Hydrokolloiden bei der Behandlung der Oberfläche ermöglicht vorteilhafterweise die Vermeidung von Tropfsaftverlusten bei Frischfleisch. Hinsichtlich der Geschmacksoptimierung kann das Hydrokolloid dem entsprechenden Fleisch durch die Wahl des Ausgangsproduktes angepaßt werden, obwohl auch Mischungen verschiedener Hydrokolloide, beispielsweise pflanzlicher und tierischer Natur, je nach Einsatzzweck vorgesehen sind.

Die nachstehenden Ausführungsbeispiele dienen der weiteren Erläuterung des erfindungsgemäßen Verfahrens.

Die Gewichtsprozentangaben beziehen sich stets auf die Gesamtnettoeinwaagen des Frischfleisches.

### Beispiel 1: Rindfleisch

Ein portioniertes Rindfleischsteak weist bei herkömmlicher Kühllagerung bei + 2 bis + 4 °C während 5 Tagen einen Tropfsaftverlust von 5,7 Gew.% auf.

Ein portioniertes Rindfleischsteak wird durch Bestäuben mit 0,6 Gew.% sprühgetrocknetem Gelatinepulver behandelt (mittlere Teilchengröße < 0,2 mm; 90 Gew.% mit einer Teilchengröße im Bereich von 0,05 bis 0,15 mm). Der nach Kühllagerung bei einer Temperatur von + 2 bis + 4 °C während 5 Tagen gemessene Tropfsaftverlust beträgt 0,3 Gew.%.

Dies entspricht einem Mehrgewinn an verwertbarem Frischfleisch von 5,4 Gew.%.

### Beispiel 2: Rindfleisch

Rindfleischgulasch weist bei Kühllagerung bei + 2 bis + 4 °C während 5 Tagen einen Tropfsaftverlust von 5,4 Gew.% auf.

Die selbe Menge Rindfleischgulasch wurde durch Einmengen von 0,5 Gew.% sprühgetrocknetem Gelatinepulver (wie Beispiel 1) gemäß dem erfindungsgemäßen Verfahren behandelt, wobei bei Kühllagerung bei + 2 bis + 4 °C während 5 Tagen der Tropfsaftverlust 0,8 Gew.% beträgt.

Dies entspricht einem Mehrgewinn an verwertbarem Frischfleisch von 4,6 Gew.%.

### Beispiel 3: Schweinefleisch

Ein portioniertes Schweinefleischschnitzel weist bei herkömmlicher Kühllagerung bei + 2 bis + 4 °C während 5 Tagen einen Tropfsaftverlust von 4,3 Gew.% auf.

Ein portioniertes Schweinefleischschnitzel wurde gemäß dem erfindungsgemäßen Verfahren mit 0,6 Gew.% sprühgetrocknetem Gelatinepulver (wie Beispiel 1) bestäubt. Nach Kühllagerung bei + 2 bis + 4 °C während 5 Tagen ergibt sich ein Tropfsaftverlust von 0,1 Gew.%.

Dies entspricht einem Mehrgewinn an verwertbarem Frischfleisch von 4,2 Gew.%.

### Beispiel 4: Geflügelfleisch

Ein portioniertes Putenschnitzel weist bei herkömmlicher Kühllagerung bei + 2 bis + 4 °C während 5 Tagen einen Tropfsaftverlust von 3,0 Gew.% auf.

Ein gemäß dem erfindungsgemäßen Verfahren durch Bestäuben mit 0,6 Gew.% einem sprühgetrockneten Gelatinepulver (wie in Beispiel 1) behandeltes Putenschnitzel weist nach Kühllagerung bei + 2 bis + 4 °C während 5 Tagen einen Tropfsaftverlust von 0,5 Gew.% auf.

Dies entspricht einem Mehrgewinn an verwertbarem Frischfleisch von 2,5 Gew.%.

### Beispiele 5 bis 44

Anhand der nachfolgenden Beispiele, bei denen als Frischfleisch Schweineschnitzel und Schweinegulasch verwendet wird, werden die erfindungsgemäßen Vorteile für verschiedene Hydrokolloid-Typen miteinander verglichen.

Die dabei zum Einsatz gelangenden weiteren Hydrokolloide wurden pulverförmig mit Partikelgrößen ≤ 0,1 mm eingesetzt und werden im folgenden auch alternative Hydrokolloide genannt:
Xanthan, als Beispiel von Hydrokolloiden, die aus Mikroorganismen gewonnen werden,
Beispiele für Hydrokolloide aus Meerespflanzen sind:
   Agar-Agar
   Alginat
   Carrageen
Beispiele für Hydrokolloide aus Landpflanzen sind:
   Gummi-Arabicum
   Cellulosederivate (z.B. Carboxymethylcellulose)
   Guarmehl
   Apfelpektin
   Johannisbrot-Kernmehl.

Schließlich wurde zu Vergleich nochmals Collagen, wie es bereits in den Beispielen 1 bis 4 zum Einsatz kam, in einigen Referenzbeispielen verwendet.

Dabei wurde je eine Versuchsreihe zur Kühllagerung und eine Versuchsreihe zur Gefrierlagerung durchgeführt.

Bei der Kühllagerung wurden die Frischfleischprodukte 5 Tage lang bei +2 bis +4°C im Kühlschrank gelagert.

Bei den Gefrierlagerversuchen werden folgende Bedingungen eingehalten:

Lagerzeit: 30 Tage; Temperatur: -20 bis -24°C in der Gefriertruhe. Die tiefgefrorenen Proben wurden schonend im Kühlschrank bei +2 bis +4 °C aufgetaut.

Die Schweineschnitzel wurden mit dem jeweiligen Hydrokolloidpulver mit den in der Tabelle angegebenen Mengen bestäubt. Beim Schweinegulasch wurde die angegebene Menge den Fleischstücken untergemengt.

Die Versuchsergebnisse der Beispiele 5 bis 44 sind in den Tabellen 1 bis 8 zusammengefaßt. Alle %-Angaben sind Gew.%-Angaben bezogen auf die Frischfleisch-Einwaage.

**Tabelle 1**

| | **Schweineschnitzel** | Frischfleisch | | | |
|---|---|---|---|---|---|
| Beispiel | Kühllagerversuch (5 Tage) | Einwaage | Endgewicht | Tropfsaftverlust | |
| | Hydrokolloid | | | g | % |
| A | Kontrolle | 253,4 | 247,2 | 6,2 | 2,5 |
| 5 | Xanthan 0,6 % | 316,1 | 313,9 | 2,2 | 0,9 |
| 6 | Agar-Agar 0,6% | 323,8 | 320,9 | 2,9 | 0,9 |
| 7 | Carrageen 0,6% | 351,7 | 348,9 | 2,8 | 0,8 |
| 8 | Guarmehl 0,6% | 321,1 | 318,7 | 2,4 | 0,7 |
| 9 | Gummi-Arabicum 0,6% | 335,2 | 331,1 | 4,1 | 1,2 |
| 10 | Apfelpektin 0,6% | 249,4 | 245,5 | 3,9 | 1,5 |

**Tabelle 2**

| | **Schweinegulasch** | Frischfleisch | | | |
|---|---|---|---|---|---|
| Beispiel | Kühllagerversuch (5 Tage) | Einwaage | Endgewicht | Tropfsaftverlust | |
| | Hydrokolloid | | | g | % |
| B | Kontrolle | 326,7 | 320,9 | 5,8 | 1,8 |
| 11 | Xanthan 0,6 % | 337,9 | 333,5 | 4,4 | 1,2 |
| 12 | Agar-Agar 0,6% | 353,0 | 350,8 | 2,2 | 0,6 |
| 13 | Carrageen 0,6% | 340,6 | 337,3 | 3,3 | 0,9 |
| 14 | Guarmehl 0,6% | 355,2 | 351,2 | 4,0 | 1,1 |
| 15 | Gummi-Arabicum 0,6% | 324,5 | 321,3 | 3,2 | 1,0 |
| 16 | Apfelpektin 0,6% | 337,2 | 333,4 | 3,8 | 1,1 |

**Tabelle 3**

| | **Schweineschnitzel** | Frischfleisch | | | |
|---|---|---|---|---|---|
| Beispiel | Gefrierlagerversuch (30 Tage) | Einwaage | Endgewicht | Tropfsaftverlust | |
| | Hydrokolloid | | | g | % |
| C | Kontrolle | 198,4 | 188,4 | 10,6 | 5,2 |
| 17 | Xanthan 0,6 % | 314,9 | 309,9 | 5,0 | 1,6 |
| 18 | Agar-Agar 0,6% | 223,8 | 319,9 | 3,9 | 1,7 |
| 19 | Carrageen 0,6% | 290,2 | 286,9 | 3,3 | 1,1 |
| 20 | Guarmehl 0,6% | 311,7 | 309,5 | 2,2 | 0,7 |
| 21 | Gummi-Arabicum 0,6% | 262,8 | 256,9 | 5,9 | 2,2 |
| 22 | Apfelpektin 0,6% | 221,7 | 214,9 | 6,8 | 2,2 |

**Tabelle 4**

| | **Schweinegulasch** | Frischfleisch | | | |
|---|---|---|---|---|---|
| Beispiel | Gefrierlagerversuch (30 Tage) | Einwaage | Endgewicht | Tropfsaftverlust | |
| | Hydrokolloid | | | g | % |
| D | Kontrolle | 269,7 | 260,1 | 9,6 | 3,6 |
| 23 | Xanthan 0,6 % | 343,6 | 340,9 | 2,7 | 0,8 |
| 24 | Agar-Agar 0,6% | 340,6 | 337,5 | 3,1 | 0,9 |
| 25 | Carrageen 0,6% | 347,7 | 345,1 | 2,6 | 0,7 |
| 26 | Guarmehl 0,6% | 346,1 | 342,4 | 3,7 | 1,1 |
| 27 | Gummi-Arabicum 0,6% | 355,4 | 353,1 | 2,3 | 0,6 |
| 28 | Apfelpektin 0,6% | 335,2 | 331,3 | 3,9 | 1,2 |

**Tabelle 5**

| | **Schweineschnitzel** | Frischfleisch | | | |
|---|---|---|---|---|---|
| Beispiel | Kühllagerversuch (5 Tage) | Einwaage | Endgewicht | Tropfsaftverlust | |
| | Hydrokolloid | | | g | % |
| E | Kontrolle | 213,2 | 207.6 | 5,6 | 2,7 |
| 29 | Referenz 0,6 % Collagen | 163,3 | 162,8 | 0,5 | 0,3 |
| 30 | 0,6% Alginat | 244,1 | 240,3 | 3,8 | 1,4 |
| 31 | 0,6% Johannisbrot-Kernmehl | 240,7 | 238,2 | 2,5 | 1,0 |
| 32 | 0,6 % Carboxymethylcellulose | 273,8 | 270,1 | 3,7 | 1,3 |

**Tabelle 6**

| | **Schweinegulasch** | Frischfleisch | | | |
|---|---|---|---|---|---|
| Beispiel | Gefrierlagerversuch (30 Tage) | Einwaage | Endgewicht | Tropfsaftverlust | |
| | Hydrokolloid | | | g | % |
| F | Kontrolle | 413,7 | 403,9 | 9,8 | 2,3 |
| 33 | Referenz 0,6 % Collagen | 397,0 | 394,8 | 2,2 | 0,6 |
| 34 | 0,6% Alginat | 389,3 | 383,7 | 5,6 | 1,4 |
| 35 | 0,6% Johannisbrot-Kernmehl | 359,5 | 356,3 | 3,2 | 0,8 |
| 36 | 0,6 % Carboxymethylcellulose | 332,6 | 329,2 | 3,4 | 1,0 |

**Tabelle 7**

| | | | | | |
|---|---|---|---|---|---|
| | **Schweineschnitzel** | Frischfleisch | | | |
| Beispiel | Gefrierlagerversuch (30 Tage) | Einwaage | Endgewicht | Tropfsaftvertust | |
| | Hydrokolloid | | | g | % |
| G | Kontrolle | 270,9 | 264,9 | 6,3 | 2.3 |
| 37 | Referenz 0,6 % Collagen | 251,0 | 249,9 | 1,1 | 0,4 |
| 38 | 0,6% Alginat | 251,3 | 248,7 | 2,6 | 1,0 |
| 39 | 0,6% Johannisbrot-Kemmehl | 327,5 | 326,1 | 1,4 | 0,4 |
| 40 | 0,6% Carboxymethylcellose | 272,0 | 257,8 | 4,2 | 1,5 |

**Tabelle 8**

| | **Schweinegulasch** | Frischfleisch | | | |
|---|---|---|---|---|---|
| Beispiel | Gefrierlagerversuch (30 Tage) | Einwaage | Endgewicht | Tropfsaftverlust | |
| | Hydrokolloid | | | g | % |
| H | Kontrolle | 413,7 | 403,9 | 9,8 | 2,3 |
| 41 | Referenz 0,6% Collagen | 397,0 | 394,8 | 2,2 | 0,6 |
| 42 | 0,6% Alginat | 389,3 | 383,7 | 5,6 | 1,4 |
| 43 | 0,6% Johannisbrot-Kemmehl | 359,5 | 356,3 | 3,2 | 0,8 |
| 44 | 0,6% Carboxymethylcellulose | 332,6 | 329,2 | 3,4 | 1,0 |

Zusammenfassend läßt sich feststellen, daß mit Collagen als Hydrokolloid bei den Kühllagerversuchen ein ca. 35 % höherer Effekt bei der Verringerung des Tropfsaftverlusteintritts als bei den alternativen Hydrokolloiden erzielt wird. Diesen Unterschied beobachtet man sowohl bei der Scheibenware "Schweineschnitzel" als auch bei der kleingestückelten Ware "Schweinegulasch".

Bei den Gefrierlagerversuchen ergibt sich beim Frischfleischprodukt Schweineschnitzel mit Collagen als Hydrokolloid eine um ca. 25 % verbesserte Wirkung, beim Schweinegulasch eine um 20 % verbesserte Wirkung als bei den alternativen Hydrokolloiden.

Allerdings stellte sich bei den mit den alternativen Hydrokolloiden behandelten Frischfleischprodukten der Nachteil ein, daß die Fleischoberfläche teilweise ein stumpfes Aussehen erhielt und außerdem leicht klebrig war, so daß damit nicht ganz der positive Effekt von Collagen als Hydrokolloid erzielt werden konnte. Collagen ist deshalb als das am meisten bevorzugte Hydrokolloid zu bezeichnen.

Das in den Beispielen 1 bis 44 eingesetzte Frischfleisch war zum Zeitpunkt der Verwendung in dem erfindungsgemäßen Verfahren 3 Tage alt.

Dieser Zeitpunkt der Behandlung hat sich in weiteren Versuchen als der günstigste herausgestellt, obwohl auch eine frühere Behandlung problemlos, allerdings mit einem etwas geringeren Effekt, möglich ist. Nach Ablauf von 3 Tagen, ab der Schlachtung werden nur wesentlich schlechtere Ergebnisse in der Behandlung gefunden.

## Patentansprüche

1. Verfahren zur Lagerung von Frischfleisch, wobei die Oberfläche des Frischfleischs nur mit festem Hydrokolloid in einer Menge von 0,2 bis 1,5 Gew.% Hydrokolloid, bezogen auf das Fleischgewicht, behandelt und danach kühl- oder gefriergelagert wird.

2. Verfahren nach Anspruch 1, **dadurch gekennzeichnet, daß** das Fleisch vor der Behandlung mit dem Hydrokolloid portioniert wird.

3. Verfahren nach Anspruch 1 oder 2, **dadurch gekennzeichnet, daß** das Hydrokolloid in Pulver- oder Granulatform vorliegt, vorzugsweise mit einer mittleren Teilchengröße < 0,2 mm.

4. Verfahren nach Anspruch 3, **dadurch gekennzeichnet, daß** das Hydrokolloid in sprühgetrockneter Form verwendet wird.

5. Verfahren nach einem der vorhergehenden Ansprüche, **dadurch gekennzeichnet, daß** das Hydrokolloid ein Hydrokolloid auf Collagenbasis umfaßt, insbesondere Gelatine, tierische Leime, Collagen, Caseine, Molkenproteine und/oder deren Hydrolysate sowie deren Mischungen untereinander.

6. Verfahren nach einem der Ansprüche 1 bis 5, **dadurch gekennzeichnet, daß** das Fleisch mit 0,5 bis 0,9 Gew.% Hydrokolloid, bezogen auf das Fleischgewicht, behandelt wird.

7. Verfahren nach einem der vorhergehenden Ansprüche, **dadurch gekennzeichnet, daß** das Fleisch Säugetierfleisch ist.

8. Verfahren nach Anspruch 7, **dadurch gekennzeichnet, daß** das Hydrokolloid ausgewählt ist aus tierischem Collagen.

9. Verfahren nach einem der Ansprüche 1 bis 6, **dadurch gekennzeichnet, daß** das Fleisch Geflügelfleisch ist.

10. Verfahren nach Anspruch 9, **dadurch gekennzeichnet, daß** das Hydrokolloid aus Geflügelcollagen ausgewählt ist.

11. Verfahren nach einem der Ansprüche 1 bis 6, **dadurch gekennzeichnet, daß** das Fleisch Fischfleisch ist.

12. Verfahren nach Anspruch 11, **dadurch gekennzeichnet, daß** das Hydrokolloid aus Fischcollagen ausgewählt ist.

13. Verfahren nach einem der vorangehenden Ansprüche, **dadurch gekennzeichnet, daß** das Hydrokolloid ein Hydrokolloid umfaßt, welches aus pflanzlichen Rohstoffen gewonnen wird.

14. Verwendung von festen Hydrokolloiden, insbesondere in sprühgetrockneter Form, zur Behandlung von Frischfleisch zur Minimierung von Tropfsaftverlust bei einer nachfolgenden Kühl- oder Gefrierlagerung.

## Claims

1. Process for the storage of fresh meat, wherein the surface of the fresh meat is treated only with solid hydrocolloid in an amount of 0.2 to 1.5 wt % of hydrocolloid, referred to the weight of the meat, and is thereafter subjected to cold or frozen storage.

2. Process according to claim 1, **characterised in that** the meat is portioned prior to the treatment with the hydrocolloid.

3. Process according to claim 1 or 2, **characterised in that** the hydrocolloid is present in powder or granule form, preferably with a mean particle size < 0.2 mm.

4. Process according to claim 3, **characterised in that** the hydrocolloid is used in spray-dried form.

5. Process according to any of the preceding claims, **characterised in that** wherein the hydrocolloid comprises a hydrocolloid based on collagen, in particular gelatine, animal glues, collagen, caseins, whey proteins and/or their hydrolysates as well as their mixtures with one another.

6. Process according to any of claims 1 to 5, **characterised in that** the meat is treated with 0.5 to 0.9 wt % of hydrocolloid, referred to the weight of the meat.

7. Process according to any of the preceding claims, **characterised in that** the meat is mammalian meat.

8. Process according to claim 7, **characterised in that** the hydrocolloid is selected from animal collagen.

9. Process according to any of claims 1 to 6, **characterised in that** the meat is poultry meat.

10. Process according to claim 9, **characterised in that** the hydrocolloid is selected from poultry collagen.

11. Process according to any of claims 1 to 6, **characterised in that** the meat is fish flesh.

12. Process according to claim 11, wherein the hydrocolloid is selected from fish collagen.

13. Process according to any of the preceding claims, **characterised in that** the hydrocolloid comprises a hydrocolloid which is obtained from vegetable raw materials.

14. Use of solid hydrocolloids, in particular in spray-dried form, for the treatment of fresh meat for the minimising of drip loss in subsequent cold or frozen storage.

## Revendications

1. Procédé de stockage de viande fraîche, dans lequel la surface de la viande fraîche est uniquement traitée avec un hydrocolloïde solide, avec une quantité de 0,2 à 1,5 % en poids d'hydrocolloïde, par rapport au poids de viande, et elle est ensuite stockée en étant réfrigérée ou congelée.

2. Procédé selon la revendication 1, **caractérisé en ce que** la viande est préportionnée avant le traitement avec l'hydrocolloïde.

3. Procédé selon l'une quelconque des revendications 1 ou 2, **caractérisé en ce que** l'hydrocolloïde se présente sous forme pulvérulente ou granulaire, de préférence avec une granulométrie moyenne < 0,2 mm.

4. Procédé selon la revendication 3, **caractérisé en ce que** l'hydrocolloïde est utilisé sous forme séchée par pulvérisation.

5. Procédé selon l'une quelconque des revendications précédentes, **caractérisé en ce que** l'hydrocolloïde comprend un hydrocolloïde à base de collagène, en particulier de la gélatine, de la colle animale, du collagène, de la caséine, des protéines de petit lait et / ou leurs hydrolysats, ainsi que les mélanges de ceux-ci.

6. Procédé selon l'une quelconque des revendications 1 à 5, **caractérisé en ce que** la viande est traitée avec 0,5 % à 0,9 % en poids d'hydrocolloïde, par rapport au poids de viande.

7. Procédé selon l'une quelconque des revendications précédentes, **caractérisé en ce que** la viande est de la viande de mammifère.

8. Procédé selon la revendication 7, **caractérisé en ce que** l'hydrocolloïde est choisi parmi le collagène animal.

9. Procédé selon l'une quelconque des revendications 1 à 6, **caractérisé en ce que** la viande est de la viande de volaille.

10. Procédé selon la revendication 9, **caractérisé en ce que** l'hydrocolloïde est choisi parmi le collagène de volaille.

11. Procédé selon l'une quelconque des revendications 1 à 6, **caractérisé en ce que** la viande est de la chair de poisson.

12. Procédé selon la revendication 11, **caractérisé en ce que** l'hydrocolloïde est choisi parmi le collagène de poisson.

13. Procédé selon l'une quelconque des revendications précédentes, **caractérisé en ce que** l'hydrocolloïde comprend un hydrocolloïde qui est extrait de matières premières végétales.

14. Utilisation d'hydrocolloïdes solides, en particulier sous forme séchée par pulvérisation, pour traiter de la viande fraîche afin de réduire au minium l'exsudat lors d'un stockage ultérieur au réfrigérateur ou au congélateur.
